# EUROPÄISCHE PATENTSCHRIFT

(11) **EP 0 412 304 B1**
(45) Veröffentlichungstag und Bekanntmachung des Hinweises auf die Patenterteilung: **16.03.1994**
(21) Anmeldenummer: 90113189.6
(22) Anmeldetag: 11.07.1990
(51) Int. Cl.: G01L 1/12, G01P 15/08

(54) **Geber zum Messen mechanischer Kräfte mit Messbandbefestigung**
Force transducer with measuring band attachment
Transducteur de force avec fixage de la bande à mesure

(30) Priorität: 11.08.1989 DE 8909652 U
(43) Veröffentlichungstag der Anmeldung: 13.02.1991
(73) Patentinhaber: Mannesmann Kienzle GmbH (HR B1220), 78052 Villingen-Schwenningen (DE)
(72) Erfinder: Hilger, Gernot, Dipl.-Phys., D-7218 Trossingen (DE); Schmid, Mechtilde, Dipl.-Ing.(FH), D-7730 Villingen-Schwenningen (DE)

(56) Entgegenhaltungen:
- EP-A- 0 036 532
- EP-A- 0 424 735
- EP-A- 0 428 952
- EP-A- 0 443 334
- DE-U- 8 909 652
- DE-U- 8 912 560
- DE-U- 9 001 973

## Beschreibung

Die Erfindung betrifft einen Geber zum Messen mechanischer Kräfte mit einem ein sehr kleines Querschnitt-Längen-Verhältnis aufweisenden Meßkörper aus amorphem, magnetoelastischem Metall, welcher mit einer Spulenanordnung elektromagnetisch gekoppelt und unter Vorspannung zwischen relativ zueinander beweglichen Befestigungsstellen des Gebers angeordnet ist (EP-A1-36532).

Bekanntlich werden zum Messen mechanischer Kräfte, obwohl erhebliche Nachteile, wie magnetische Beeinflußbarkeit und somit Abschirmaufwand, aber auch Nichtlinearität in Kauf zu nehmen sind, magnetoelastische Effekte vorzugsweise deshalb benutzt, weil entsprechende Geber einerseits vergleichsweise empfindlich sind und dementsprechend hohe Meßsignale liefern, andererseits einfach herstellbar und insbesondere dort anwendbar sind, wo rauhe Betriebsbedingungen vorherrschen.

Als bestgeeignetstes Material für den betreffenden Meßkörper haben sich amorphe Metallegierungen herausgestellt. Derartige Metalle weisen außerordentliche weichmagnetische Eigenschaften auf, d. h. extrem kleine Ummagnetisierungsverluste und hohe Permeabilitätswerte. Außerdem sind die mechanischen Kennwerte, wie Zugfestigkeit und elastischer Bereich, um ein vielfaches höher als bei polykristallinen, weichmagnetischen Metallen, so daß der Meßkörper als äußerst dünnes Band in einer Größenordnung von 20 bis 30µm oder relativ dünnes Drahtstück, also extrem massearm, hergestellt werden kann.

Infolge der hohen mechanischen Belastbarkeit des amorphen Materials ist die für das Festlegen des Gebernullpunktes erwünschte Vorspannung lediglich von magnetischen Größen, in diesem Falle von der Sättigungs-Magnetostriktion begrenzt, d. h. daß eine gute Justierbarkeit gegeben ist. Da sich amorphes Metall durch besonders gute Korrosionsbeständigkeit und Lastwechselfestigkeit auszeichnet, ist ferner eine Eignung insbesondere für das Anwendungsgebiet "Kraftfahrzeug" gegeben.

Trotz der amorphen Struktur lassen sich diese Metalle biegen, stanzen und punktschweißen. Es hat sich jedoch gezeigt, daß die Befestigung des Meßkörpers an den kraftübertragenden, relativ zueinander beweglichen Bauteilen des Gebers, insbesondere was das Langzeitverhalten unter Vorspannung sowie Stoßbelastungen anbelangt, bisher nicht zufriedenstellend gelöst werden konnte. So ist es auch bei Einsatz von speziellen Laserschweißverfahren nicht möglich, Veränderungen des Materials, insbesondere eine Rekristallisierung, zu vermeiden. Einpressungen, Klebeverbindungen und Einspannungen mittels geeigneter Klemmstücke sind, nicht zuletzt auch wegen der extrem geringen Rauhigkeit des Materials, nicht ausreichend kriechfest, andererseits sind punkt- bzw. linienförmige Klemmverbindungen, die eine Kerbwirkung ausüben, nur ungenügend stoßbelastbar.

Der vorliegenden Erfindung war demnach die Aufgabe gestellt, für einen Geber zum Messen mechanischer Kräfte gemäß der im Gattungsbegriff genannten Art eine absolut kriechfeste und hochbelastbare Befestigung der Enden eines band- oder drahtförmigen Meßkörpers aus amorphem Metall zu schaffen.

Die Lösung der Aufgabe sieht vor, daß zur Befestigung wenigstens des einen Endes eines vorzugsweise bandförmigen Meßkörpers ein Wickeldorn vorgesehen ist und daß an der betreffenden Befestigungsstelle des Gebers eine eine Drehbewegung und eine Befestigung des Wickeldorns gestattende Lagerung ausgebildet sind.

Ein bevorzugtes Ausführungsbeispiel ist dadurch gekennzeichnet, daß zur Befestigung wenigstens des einen Endes eines vorzugsweise bandförmigen Meßkörpers ein Wickeldorn vorgesehen ist und daß an der betreffenden Befestigungsstelle des Gebers eine eine Drehbewegung und ein Befestigen des Wickeldorns gestattende Lagerung ausgebildet ist.

Eine vorteilhafte Ausführung des Gebers ist ferner dadurch gekennzeichnet, daß die relativ zueinander beweglichen Bauteile des Gebers ein die Spulenanordnung tragendes und für die Befestigung des Gebers ausgebildetes Gehäuse und eine in Achsrichtung der Spulenanordnung federnd angeordnete Masse umfassen und daß sowohl an dem Gehäuse als auch an der beweglichen Masse eine einem Wickeldorn zugeordnete Lagerung und wenigstens ein Klemmgesperre unmittelbar ausgebildet sind.

Die Erfindung bietet den entscheidenden Vorteil, daß insbesondere bei Verwendung eines bandförmigen Meßkörpers, wenn dieser mehrlagig gewickelt ist, eine sehr große Reibfläche geschaffen ist und die einzelnen Windungen sich unter der Wirkung der Vorspannung gegeneinander festziehen. Dabei ist das innenliegende, in den Schlitz abgewinkelte Bandende durch die erfolgende Untersetzung von der im Band wirkenden Kraft weitgehend entlastet, während die außen liegende Einlaufstelle des Bandes mit einem relativ großen Radius knickfrei zum Bandwickel umgelenkt wird. Auf diese Weise bietet die Erfindung sowohl eine kriechfreie, als auch eine bruchsichere Befestigung der Enden des Meßkörpers.

Ein weiterer Vorteil ist darin zu sehen, daß die Vorspannung des Meßkörpers feinfühlig, letzten Endes auch meßbar einstellbar ist, d. h. daß der Arbeitspunkt auf einfache Weise beliebig justierbar ist und somit auch eine Eignung für die Großserienfertigung gegeben ist, indem die dort erforderlichen Toleranzen, im Gegensatz zu anderen Befestigungsmethoden auf einfache Weise ausgleichbar sind.

Die erfindungsgemäße, mittelbare Befestigung des Bandes gestattet es aber auch, eine nichtlösbare Verbindungstechnik anzuwenden, d. h. den Wickeldorn nach dem Spannen und Justieren des Bandes beispielsweise durch Kleben oder Schweißen in seiner Lagerung zu befestigen.

Im folgenden sei die Erfindung anhand der beigefügten Zeichnungen näher erläutert. Es zeigen
FIGUR 1 eine Teilschnittdarstellung eines Beschleunigungsgebers,
FIGUR 2 eine Draufsicht auf eine Stirnseite des Beschleunigungsgebers gemäß FIGUR 1,
FIGUR 3 eine Draufsicht eines Kraftgebers mit ringförmigem Kraftleiter.

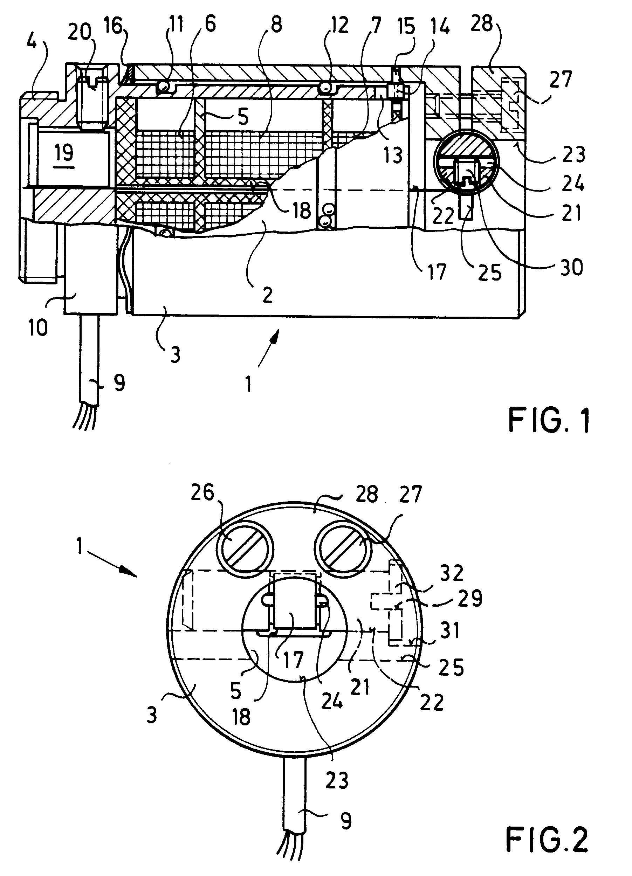

Der Beschleunigungsgeber 1 gemäß FIGUR 1, der beschleunigungsabhängige, mechanische Kräfte mittels einer seismischen Masse erfaßt und in eine elektrische Meßgröße wandelt, besteht aus zwei Hülsen 2 und 3, die ineinander geführt und in axialer Richtung relativ zueinander bewegbar angeordnet sind. An der einen Hülse 2 ist ein Gewindeansatz 4 ausgebildet, mittels dessen der Beschleunigungsgeber 1 beispielsweise an einer Chassiswand eines Fahrzeuges, unter Umständen unter Verwendung eines geeigneten Halters, der gegebenenfalls eine Ausrichtung des Beschleunigungsgebers 1 gestattet, befestigt werden kann. Im Innern der Hülse 2 ist ein Spulenkörper 5 befestigt, der für die in diesem Falle gewählte transformatorische Meßwertwandlung eine Spulenanordnung, bestehend aus zwei Primärspulen 6 und 7 und einer Sekundärspule 8, trägt. Mit 9 ist ein den Spulen zugeordnetes Kabel bezeichnet, das über eine geeignete Öffnung in einem an der Hülse 2 ausgebildeten Flansch 10 aus dem Geber 1 herausgeführt ist.

Die andere Hülse 3 dient als seismische Masse. Sie ist auf der Hülse 2 geführt, wobei zur Minimierung der Reibung zwei Reihen Kugeln 11 und 12 als Wälzkörper zwischengeschaltet sind. Als Sicherung gegen Verdrehen der beiden Hülsen 2 und 3 gegeneinander dient eine in einen Schlitz 13, der in der Hülse 2 ausgebildet ist, eingreifende Rolle 14, die ihrerseits auf einer in der Hülse 3 befestigten Achse 15 gelagert ist. Eine zwischen den beiden Hülsen 2 und 3 wirkende Wellfeder ist mit 16 bezeichnet und liefert die Vorspannkraft für den eigentlichen Meßkörper, ein dünnes Band 17 aus amorphem Metall, welches einerseits in der Hülse 2, andererseits in der Hülse 3 derart befestigt ist, daß es in einem möglichst engen Spalt 18 des Spulenkörpers 5 berührungsfrei angeordnet ist.

Die Befestigung des Bandes 17 in der Hülse 2 erfolgt mittels eines Klemmstücks 19, auf welches eine im Flansch 10 angeordnete Schraube 20 einwirkt. Für die Befestigung des Bandes 17 in der Hülse 3 ist ein Wickeldorn 21 vorgesehen, welcher in einer quer zur geometrischen Achse der Hülse 3 angebrachten Öffnung 22 im nicht näher bezeichneten Boden der Hülse 3 drehbar gelagert ist. Die Öffnung 22 ist durch eine in Achsrichtung der Hülse 3 angebrachte Bohrung 23 wenigstens teilweise freigespart, so daß in vorteilhafter Weise für den Wickeldorn 21 zwei Lagerstellen gebildet sind und ein in der Mitte des Wickeldorns 21 vorgesehener Schlitz 24, der dem Einhängen des einen Bandendes dient, von außen leicht zugänglich ist.

Zur Befestigung des Wickeldorns 21 in seiner Lagerung, der Öffnung 22, ist ein Klemmgesperre vorgesehen. Hierzu ist der Boden der Hülse 3 in der Achsebene der Öffnung 22 geschlitzt (Schlitz 25). Mittels Schrauben 26 und 27 kann der Wickeldorn 21 über den durch den Schlitz 25 abgetrennten, federnden Teil 28 des Bodens der Hülse 3 festgespannt werden.

Eine im Wickeldorn 21, der einen Betätigungsschlitz 29 aufweist, angebrachte Schraube 30 stellt eine zusätzliche Sicherung dar und dient dem "Anheften" des in den Schlitz 24 eingehängten Bandendes, bevor durch Drehen des Wickeldorns 21 mehrere Wicklungen des Bandendes übereinander aufgenommen werden und letzten Endes entgegen der Wirkung der Feder 16 die beiden Hülsen 2 und 3 bis zum Erreichen der erforderlichen Vorspannung im Band 17 gegeneinander gezogen werden. Für die Betätigung des Wickeldorns 21 und die Ausrichtung des Bandes 17 ist es von Vorteil, wenn dem Wickeldorn 21 ein Anschlag in axialer Richtung zugeordnet ist. Gemäß FIGUR 2 ist hierfür die Öffnung 22 mit einer zylindrischen Senkung 31 und der Wickeldorn 21 mit einem Bund 32 versehen.

Der Vollständigkeit halber sei noch erwähnt, daß dem Beschleunigungsgeber 1 eine Kapsel zugeordnet werden kann, die die Zugänge zu den Befestigungsstellen abdeckt und gleichzeitig eine magnetische Schirmwirkung ausübt. Ferner ist es denkbar, die beschriebene Befestigungsstelle des Bandes 17 in einem mit der Hülse 3 verbindbaren Bauteil auszubilden.

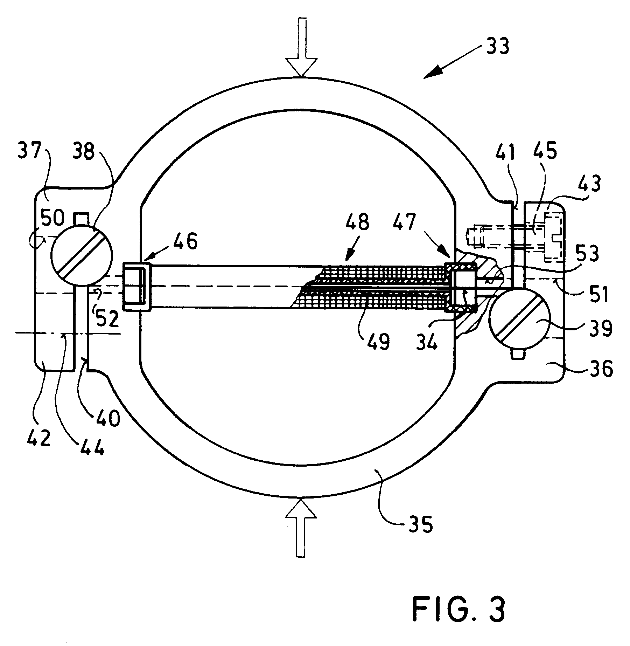

Bei dem in FIGUR 3 dargestellten Kraftgeber 33 ist ein als Meßkörper dienendes Band 34 in einem als Kraftleiter wirkenden Halter 35 diametral eingespannt. Die zu messende Kraft wird, was durch Pfeile symbolisiert ist, rechtwinklig zum Band 34 in den Halter 35 eingeleitet, wobei geeignete, mit dem Meßobjekt fest verbundene Übertragungsmittel vorgesehen sein müssen. Für den Halter 35 sind selbstverständlich auch andere Bauformen denkbar, beispielsweise U- oder L-förmige Biegebalken, die auch für Beschleunigungsgeber verwendbar sind.

An dem ringförmigen Halter 35 sind Ansätze 36 und 37 angeformt, in denen die Befestigungsstellen für das Band 34 ausgebildet sind. D. h. für jedes Bandende ist ein Wickeldorn 38 bzw. 39 vorgesehen, welcher in einer in dem jeweiligen Ansatz 36 bzw. 37 ausgebildeten, nicht näher bezeichneten Öffnung gelagert ist. Ferner ist jedem Wickeldorn 38, 39 ein an den betreffenden Ansätzen 36, 37 ausgebildetes Klemmgesperre zugeordnet, d. h. es ist an jedem Ansatz 36, 37 durch einen Schlitz 40, 41 ein federnder Abschnitt 42, 43 ausgebildet, dem wenigstens eine Schraube 44, 45 zugeordnet ist. Eine in jedem Ansatz 36 bzw. 37 ausgebildete Nut 46 bzw. 47 dient der Aufnahme einer Spulenanordnung 48, indem am Spulenkörper 49 angeformte, nicht näher bezeichnete Lappen in die Nute 46 und 47 eingreifen und, was bei der gezeigten Steckverbindung zwischen dem Halter 35 und dem Spulenkörper 49 nicht zwingend erforderlich ist, z. B. durch Kleben zusätzlich befestigt werden. Öffnungen 50, 51 ermöglichen den Zugang zu den den Bandenden zugeordneten Einsteckschlitzen in den Wickeldornen 38 und 39. Mit 52 und 53 sind in den Ansätzen 36 und 37 ausgebildete Freisparungen für eine berührungsfreie Durchführung des Bandes 34 bezeichnet.

## Patentansprüche

1. Geber zum Messen mechanischer Kräfte mit einem ein sehr kleines Querschnitt-Längen-Verhältnis aufweisenden Meßkörper (17) aus amorphem, magnetoelastischem Metall, welcher mit einer Spulenanordnung (6,7,8) elektromagnetisch gekoppelt und unter Vorspannung zwischen relativ zueinander beweglichen Befestigungsstellen des Gebers angeordnet ist,
dadurch gekennzeichnet,
daß zur Befestigung wenigstens des einen Endes des vorzugsweise bandförmigen Meßkörpers (17) ein Wickeldorn (21) vorgesehen ist und
daß an der betreffenden Befestigungsstelle des Gebers (1) eine eine Drehbewegung und ein Befestigen des Wickeldorns (21) gestattende Lagerung (22) ausgebildet ist.

2. Geber nach Anspruch 1,
dadurch gekennzeichnet,
daß für die Befestigung des Wickeldorns (21) in der Lagerung (22) ein Klemmgesperre vorgesehen ist.

3. Geber nach Anspruch 1 und 2,
dadurch gekennzeichnet,
daß wenigstens eine Befestigungsstelle des Bandes (17) in einem mit dem Geber (1) verbindbaren Bauteil, in welchem eine Lagerung (22) für einen Wickeldorn (21) und ein Klemmgesperre ausgebildet sind, vorgesehen ist.

4. Geber nach Anspruch 1,
dadurch gekennzeichnet,
daß für die Befestigung des Wickeldorns (21) in der Lagerung (22) eine nicht lösbare Verbindung vorgesehen ist.

5. Geber nach Anspruch 1,
dadurch gekennzeichnet,
daß an dem Wickeldorn (21) stirnseitig ein dem Verdrehen des Wickeldorns (21) dienender (29) und mantelseitig ein dem Einhängen des Bandes (17) dienender Schlitz (24) ausgebildet sind.

6. Geber nach Anspruch 1,
dadurch gekennzeichnet,
daß für beide Enden des Bandes (17) ein Wickeldorn (21) vorgesehen ist.

7. Geber nach Anspruch 1,
dadurch gekennzeichnet,
daß die Lagerung des Wickeldorns (21) als zweistellige Lagerung ausgebildet ist.

8. Geber nach Anspruch 1,
dadurch gekennzeichnet,
daß die den Wickeldornen (21) zugeordneten Lagerungen (22) und wenigstens ein Klemmgesperre an relativ zueinander beweglichen Bauteilen des Gebers (1) unmittelbar ausgebildet sind.

9. Geber nach Anspruch 1,
dadurch gekennzeichnet,
daß die relativ zueinander beweglichen Bauteile des Gebers (1) ein die Spulenanordnung (5, 6, 7, 8) tragendes und für die Befestigung des Gebers ausgebildetes Gehäuse und eine in Achsrichtung der Spulenanordnung federnd angeordnete Masse umfassen und
daß sowohl an dem Gehäuse als auch an der beweglichen Masse eine einem Wickeldorn (21) zugeordnete Lagerung (22) und wenigstens ein Klemmgesperre unmittelbar ausgebildet sind.

10. Geber nach Anspruch 6,
dadurch gekennzeichnet,
daß die relativ zueinander beweglichen Bauteile des Gebers (1) von einer die Spulenanordnung (5, 6, 7, 8) tragenden ersten Hülse (2) und einer auf dieser verschiebbar gelagerten und als bewegliche Masse dienenden zweiten Hülse (3) gebildet sind.

11. Geber nach Anspruch 1,
dadurch gekennzeichnet,
daß die Befestigungsstellen des Bandes (17) an einem einzigen, elastisch verformbaren Halter des Gebers vorgesehen sind.

## Claims

1. Sensor for measuring mechanical forces, having a measuring body (17) which has a very small cross-section-to-length ratio and is of amorphous magneto-elastic metal, is coupled electromagnetically to a coil arrangement (6, 7, 8) and is arranged under pretension between mutually relatively movable securing points of the sensor, characterized in that, for securing at least the one end of the preferably strip-shaped measuring body (17), there is provided a winding mandrel (21), and in that a mounting (22) enabling the winding mandrel (21) to be rotated and secured is constructed at the securing point concerned of the sensor (1).

2. Sensor according to Claim 1, characterized in that a clamping lock is provided for securing the winding mandrel (21) in the mounting (22).

3. Sensor according to Claim 1 and 2, characterized in that at least one securing point of the strip (17) is provided in a component which is connectable to the sensor (1) and in which there is constructed a mounting (22) for a winding mandrel (21) and a clamping lock.

4. Sensor according to Claim 1, characterized in that a non-detachable connection is provided for securing the winding mandrel (21) in the mounting (22).

5. Sensor according to Claim 1, characterized in that there are provided on the winding mandrel (21) on the end side a slot (29) serving to rotate the winding mandrel (21) and on the casing side a slot (24) serving to suspend the strip (17).

6. Sensor according to Claim 1, characterized in that a winding mandrel (21) is provided for both ends of the strip (17).

7. Sensor according to Claim 1, characterized in that the mounting of the winding mandrel (21) is constructed as a two-position mounting.

8. Sensor according to Claim 1, characterized in that the mountings (22) associated with the winding mandrels (21) and at least one clamping lock are constructed directly on mutually relatively movable components of the sensor (1).

9. Sensor according to Claim 1, characterized in that the mutually relatively movable components of the sensor (1) include a housing which carries the coil arrangement (5, 6, 7, 8) and is constructed for securing the sensor, and a mass arranged resiliently in the axial direction of the coil arrangement, and in that a mounting (22) associated with the winding mandrel (21) and at least one clamping lock are constructed directly both on the housing and on the movable mass.

10. Sensor according to Claim 6, characterized in that the mutually relatively movable components of the sensor (1) are formed by a first sleeve (2) carrying the coil arrangement (5, 6, 7, 8) and a second sleeve (3) mounted displaceably on the first sleeve (2) and serving as a movable mass.

11. Sensor according to Claim 1, characterized in that the securing points of the strip (17) are provided on a single elastically deformable holder of the sensor.

## Revendications

1. Transmetteur pour la mesure de forces mécaniques avec un corps de mesure (17) présentant un très petit rapport section-surface en un métal magnéto-élastique, amorphe qui est couplé, par voie électromagnétique, avec un dispositif à bobine (6, 7, 8) et disposé, avec une précontrainte, entre des points de fixation relativement mobiles l'un par rapport à l'autre du transmetteur,
caractérisé par le fait
que, pour la fixation d'au moins l'une des extrémités du corps de mesure (17) réalisé, de préférence, en forme de bande, il est prévu un mandrin de bobinage (21) et qu'au point de fixation concerné du transmetteur (1) est formé un support de montage (22) permettant un mouvement rotatif et une fixation dudit mandrin de bobinage (21)

2. Transmetteur selon la revendication 1,
caractérisé par le fait
que, pour la fixation du mandrin de bobinage (21), il est prévu un encliquetage à serrage dans ledit support de montage (22).

3. Transmetteur selon l'une quelconque des revendications 1 et 2,
caractérisé par le fait
que, dans un composant pouvant être relié au transmetteur (1) et dans lequel sont formés un support de montage (22) pour un mandrin de bobinage (21) et un encliquetage à serrage, il est prévu au moins un point de fixation de la bande (17).

4. Transmetteur selon la revendication 1,
caractérisé par le fait
que, pour la fixation du mandrin de bobinage (21) dans le support de montage (22), il est prévu un assemblage non détachable.

5. Transmetteur selon la revendication 1,
caractérisé par le fait
qu'il est formée, d'une part, sur la face frontale du mandrin de bobinage (21), une fente (29) servant au déplacement radial dudit mandrin de bobinage (21) et, d'autre part, sur la surface latérale, une fente (24) servant à l'accrochage de la bande (17).

6. Transmetteur selon la revendication 1,
caractérisé par le fait
qu'il est prévu un mandrin de bobinage (21) pour les deux extrémités de la bande (17).

7. Transmetteur selon la revendication 1,
caractérisé par le fait
que le support de montage du mandrin de bobinage (21) est réalisé comme support de montage à deux positions.

8. Transmetteur selon la revendication 1,
caractérisé par le fait
que les supports de montage (22) associés aux mandrins de bobinage (21) et au moins un encliquetage à serrage sont directement formés sur des composants mobiles l'un par rapport à l'autre du transmetteur (1).

9. Transmetteur selon la revendication 1,
caractérisé par le fait
que les composants du transmetteur (1), mobiles les uns par rapport aux autres, contiennent un boîtier qui porte le dispositif à bobine (5, 6, 7, 8) et qui est formé pour la fixation du transmetteur ainsi qu'une masse montée élastiquement dans le sens de l'axe du dispositif à bobine et que sur le boîtier aussi bien que sur la masse mobile sont directement formés un support de montage (22) associé à un mandrin de bobinage (21 et au moins un encliquetage par serrage.

10. Transmetteur selon la revendication 1,
caractérisé par le fait
que les composants mobiles l'un par rapport à l'autre du transmetteur (1) sont constitués par une première douille (2) portant le dispositif à bobine (5, 6, 7, 8) et par une seconde douille (3) montée mobile sur ladite première douille (2) et servant de masse mobile.

11. Transmetteur selon la revendication 1,
caractérisé par le fait
que les points de fixation de la bande (17) sont prévus sur un support unique, élastiquement déformable du transmetteur.
